# EUROPÄISCHE PATENTSCHRIFT

(11) **EP 1 869 330 B1**
(45) Veröffentlichungstag und Bekanntmachung des Hinweises auf die Patenterteilung: **19.08.2009**
(21) Anmeldenummer: 06722574.8
(22) Anmeldetag: 09.03.2006
(51) Int. Cl.: F15B 15/20, F15B 21/08, B60R 16/08, B60R 16/02

(54) **ELEKTROHYDRAULISCHE STEUEREINRICHTUNG**
ELECTROHYDRAULIC CONTROL DEVICE
DISPOSITIF DE COMMANDE ELECTROHYDRAULIQUE

(30) Priorität: 07.04.2005 DE 102005015968
(43) Veröffentlichungstag der Anmeldung: 26.12.2007
(73) Patentinhaber: LuK Lamellen und Kupplungsbau Beteiligungs KG, 77815 Bühl (DE)
(72) Erfinder: GRETHEL, Marco, 77830 Bühlertal (DE); HOMM, Manfred, 77815 Bühl-Neusatz (DE)
(86) Internationale Anmeldenummer: PCT/DE2006/000417
(87) Internationale Veröffentlichungsnummer: WO 2006/105749

(56) Entgegenhaltungen:
- EP-A- 0 665 381
- EP-A- 0 688 957
- WO-A-20/04031593
- US-A- 5 253 143
- US-A1- 2003 047 065

## Beschreibung

Die Erfindung betrifft eine elektrohydraulische Steuereinrichtung nach dem Oberbegriff des Patentanspruchs 1.

Eine solche Steuereinrichtung ist beispielsweise aus der Offenlegungsschrift US 2003/0047065 A1 bekannt.

Aufgabe der Erfindung ist es, eine sicher funktionierende und kostengünstig herstellbare elektrohydraulische Steuereinrichtung zu schaffen, die mindestens ein elektrisches Aktorelement, mindestens ein Sensorelement und mindestens ein elektronisches Steuergerät umfasst.

Die Aufgabe ist bei einer elektrohydraulischen Steuereinrichtung durch die Merkmale des Patentanspruchs 1 gelöst. Im Rahmen der vorliegenden Erfindung hat sich herausgestellt, dass es im Hinblick auf die Herstellkosten günstiger ist, das elektronische Steuergerät nicht in einem gemeinsamen Gehäuse zusammen mit hydraulischen Aktorelementen und Sensorelementen unterzubringen. Das separate elektronische Steuergerät liefert den Vorteil, dass auf eine aufwendige hydraulische Kapselung des elektronischen Steuergeräts verzichtet werden kann. Dies gilt insbesondere dann, wenn das elektronische Steuergerät an einer vor Umgebungseinflüssen geschützten Stelle des Kraftfahrzeugs, zum Beispiel im Fahrzeuginnenraum, angeordnet ist. Die hydraulische Steuereinrichtung kann zum Beispiel direkt an eine zu steuernde Hydraulikeinheit angebaut sein. Durch den gemeinsamen Leistungs- und Signalanschluss wird eine zentrale Anschlussstelle geschaffen, die einfach abzudichten ist. Bei dem Aktorelement handelt es sich vorzugsweise um einen Elektromagneten, der zur Betätigung eines Hydraulikventils dient. Vorzugsweise weist die hydraulische Steuereinrichtung mindestens eine Hydraulikanschlusseinrichtung auf, die zum Anschluss der hydraulischen Steuereinrichtung an eine Hydraulikeinheit dient. Die elektrischen Aktorelemente und die Sensorelemente können im Innern der hydraulischen Steuereinrichtung zum Beispiel mit Hilfe von flexiblen Leitungen über einfache Kontaktierungen, wie Steckkontakte, mit dem gemeinsamen Leistungs- und Signalanschluss verbunden sein. Daher kann auf einen aufwendigen Einzelschutz der Aktor- und Sensorelemente verzichtet werden. Gemäß einem Aspekt der vorliegenden Erfindung muss nur an dem gemeinsamen Leistungs- und Signalanschluss die Dichtheit der Kontaktierungen von innen nach außen und umgekehrt sichergestellt werden. Die Erfindung zeichnet sich insbesondere dadurch aus, dass
die hydraulische Steuereinrichtung mindestens eine Leiteinrichtung aus Kunststoff umfasst, in welche die Verbindungsleitungen eingebettet sind. Vorzugsweise sind die Verbindungsleitungen aus einem Stanzgitter gebildet, das in Kunststoff eingelegt oder mit Kunststoff umspritzt ist.

Ein bevorzugtes Ausführungsbeispiel der Steuereinrichtung ist **dadurch gekennzeichnet, dass** der gemeinsame Leistungs- und Signalanschluss einstückig mit der Leiteinrichtung ausgebildet ist. Vorzugsweise umfasst der Leistungs- und Signalanschluss einen Stecker aus Kunststoff, der an die Leiteinrichtung angespritzt ist. Darüber hinaus sind die Verbindungsleitungen im Bereich des Leistungs- und Signalanschlusses mit Kunststoff umspritzt, um die Schnittstelle zwischen den Verbindungsleitungen und dem Stecker abzudichten.

Ein weiteres bevorzugtes Ausführungsbeispiel der Steuereinrichtung ist **dadurch gekennzeichnet, dass** mindestens ein Sensorelement in die Leiteinrichtung integriert ist. Vorzugsweise ist das Sensorelement mit Kunststoff umspritzt, um eine sichere Abdichtung gegenüber einem Hydraulikmedium zu gewährleisten, das in der hydraulischen Steuereinrichtung enthalten ist.

Ein weiteres bevorzugtes Ausführungsbeispiel der Steuereinrichtung ist **dadurch gekennzeichnet, dass** mindestens ein Hall- und/oder mindestens ein Drucksensor in die Leiteinrichtung integriert sind. Der Hallsensor dient zum Beispiel dazu, die Stellung eines Ventilschiebers zu überwachen. Der Drucksensor dient zum Beispiel dazu, den Druck eines Hydraulikmediums zu erfassen, das an einer bestimmten Stelle in der hydraulischen Steuereinrichtung enthalten ist.

Ein weiteres bevorzugtes Ausführungsbeispiel der Steuereinrichtung ist **dadurch gekennzeichnet, dass** mindestens ein Steckverbindungselement in die Leiteinrichtung integriert ist. Das Steckverbindungselement dient zum Beispiel zum Anschluss eines Elektromagneten.

Ein weiteres bevorzugtes Ausführungsbeispiel der Steuereinrichtung ist **dadurch gekennzeichnet, dass** die hydraulische Steuereinrichtung eine Schutzhaube aus Kunststoff aufweist. Die Schutzhaube dient dazu, die hydraulische Steuereinrichtung zur Umgebung hin abzudichten.

Ein weiteres bevorzugtes Ausführungsbeispiel der Steuereinrichtung ist **dadurch gekennzeichnet, dass** der gemeinsame Leistungs- und Signalanschluss einstückig mit der Schutzhaube ausgebildet ist. Vorzugsweise umfasst der Leistungs- und Signalanschluss einen Stecker aus Kunststoff, der an die Schutzhaube angespritzt ist. Darüber hinaus sind die Verbindungsleitungen mit Kunststoff umspritzt, um die Schnittstelle zwischen den Verbindungsleitungen und dem Stecker abzudichten.

Ein weiteres bevorzugtes Ausführungsbeispiel der Steuereinrichtung ist **dadurch gekennzeichnet, dass** die hydraulische Steuereinrichtung mindestens eine Ventileinrichtung umfasst. Die Ventileinrichtung umfasst zum Beispiel einen Ventilschieber, der entgegen der Vorspannkraft einer Ventilfeder in einer entsprechenden Kanalführung in der hydraulischen Steuereinrichtung hin und her bewegbar ist.

Ein weiteres bevorzugtes Ausführungsbeispiel der Steuereinrichtung ist **dadurch gekennzeichnet, dass** die hydraulische Steuereinrichtung mindestens eine Steuerplatte umfasst. Vorzugsweise wird die Steuerplatte in Labyrinthbauweise von einem Aluminiumdruckgussgehäuseteil gebildet, das Kanäle und Anschlüsse, insbesondere Hydraulikanschlüsse, für hydraulische Ventile umfasst. In der Steuerplatte oder in einer weiteren Steuerplatte können Ventilschieber und Elektromagnete von hydraulischen Ventilen untergebracht sein.

Weitere Vorteile, Merkmale und Einzelheiten der Erfindung ergeben sich aus der nachfolgenden Beschreibung, in der unter Bezugnahme auf die Zeichnung zwei Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer elektrohydraulischen Steuereinrichtung gemäß einem ersten Ausführungsbeispiel und
- Figur 2: eine schematische Darstellung einer elektrohydraulischen Steuereinrichtung, welche von den Patentansprüchen nicht umfasst ist.

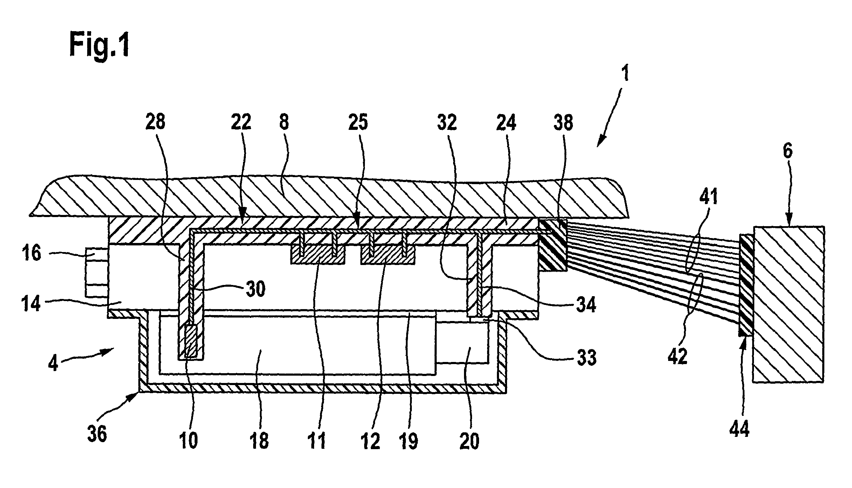

In Figur 1 ist eine elektrohydraulische Steuereinrichtung 1 schematisch dargestellt. Die elektrohydraulische Steuereinrichtung 1 umfasst eine hydraulische Steuereinrichtung 4 und ein elektronisches Steuergerät 6. Die hydraulische Steuereinrichtung 4 ist an einer Grenzfläche 8 eines Kraftfahrzeugs an oder in der Nähe einer zu steuernden (nicht dargestellten) Hydraulikeinheit angebracht. Bei der Hydraulikeinheit kann es sich zum Beispiel um ein automatisches Kraftfahrzeuggetriebe handeln. Es kann sich aber auch zum Beispiel um eine hydraulische Wankstabilisierungseinrichtung handeln. Gemäß der vorliegenden Erfindung wird das elektronische Steuergerät 6 von der hydraulischen Steuereinrichtung 4 getrennt und bewusst an einer anderen Stelle am Kraftfahrzeug untergebracht, wo das elektronische Steuergerät 6 nicht oder zumindest nicht so stark Umgebungseinflüssen ausgesetzt ist. Daher kann eine aufwendige Kapselung des elektronischen Steuergeräts 6 entfallen.

Die hydraulische Steuereinrichtung 4 enthält einen Hallsensor 10 und zwei Drucksensoren 11, 12. Der Hallsensor 10 dient dazu, die Position beziehungsweise Stellung eines Ventilschiebers zu erfassen, der in der hydraulischen Steuereinrichtung 4 bewegbar aufgenommen ist. Die Drucksensoren 11, 12 dienen dazu, den Druck eines Hydraulikmediums an verschiedenen Stellen in dem elektronischen Steuergerät 6 zu erfassen.

Die hydraulische Steuereinrichtung 4 umfasst eine erste Steuerplatte 14, die in Labyrinthbauweise von einem Aluminiumdruckgussgehäuseteil gebildet wird. In der ersten Steuerplatte 14 sind Kanäle und Hydraulikanschlüsse untergebracht, die in einem gemeinsamen Hydraulikanschluss 16 zusammengefasst sind. Durch ein Zwischenblech 19 ist eine zweite Steuerplatte 18 von der ersten Steuerplatte 14 getrennt. In der zweiten Steuerplatte 18 ist ein (nicht dargestellter) Ventilschieber hin und her bewegbar geführt, dessen Stellung von dem Hallsensor 10 erfasst wird. Der Ventilschieber wird durch einen Elektromagneten 20, der auch als Aktor oder Aktorelement bezeichnet wird, betätigt. Der Elektromagnet 20 ist ebenfalls in der zweiten Steuerplatte 18 untergebracht.

Die hydraulische Steuereinrichtung 4 umfasst des Weiteren eine Leiteinrichtung 22, die aus Kunststoff 24 gebildet ist. In den Kunststoff 24 sind eine Vielzahl von Leistungs-übertragungs- und Signalübertragungsleitungen 25 eingebettet. Die Leistungsübertragungs- und Signalübertragungsleitungen 25 werden vorzugsweise von Stanzgittern gebildet, die mit dem Kunststoff 24 umspritzt sind. Die Leiteinrichtung 22 weist einen ersten Leiterarm 28 auf, der sich von der Leiteinrichtung 22 durch die erste Steuerplatte 14 bis in die zweite Steuerplatte 18 hinein erstreckt. In dem freien Ende des ersten Leiterarms 28 ist der Hallsensor 10 untergebracht. Von dem Hallsensor 10 geht eine Signalleitung 30 aus, die in den Leiterarm 28 eingebettet ist. Darüber hinaus geht von der Leiteinrichtung 22 ein zweiter Leiterarm 32 aus, der sich ebenfalls durch die erste Steuerplatte 14 bis in den Bereich der zweiten Steuerplatte 18 hinein erstreckt. An dem freien Ende des zweiten Leiterarms 32 ist ein Steckkontakt 33 zum Anschluss des Elektromagneten 20 vorgesehen, der in der zweiten Steuerplatte 18 untergebracht oder an diese angebaut ist. Von dem Steckkontakt 33 erstreckt sich eine Leistungsleitung 34 durch den Leiterarm 32 in die Leiteinrichtung 22.

Die Leiteinrichtung 22 und die erste Steuerplatte 14 sind nach außen druckdicht. Die zweite Steuerplatte 18 mit dem Elektromagneten 20 ist gegenüber der Umgebung durch eine Schutzhaube 36 aus Kunststoff abgedichtet.

Außerdem ist an die Leiteinrichtung 22 ein zentraler Anschlussstecker 38 aus Kunststoff angespritzt. Durch den zentralen Anschlussstecker 38 werden die Vielzahl von Leistungsübertragungs- und Signalübertragungsleitungen 25 aus der hydraulischen Steuereinrichtung 4 herausgeführt. Durch 41 sind mehrere Kabelleitungen für Sensorelemente angedeutet. Mit 42 sind Kabelleitungen für Elektromagneten bezeichnet. Die Kabelleitungen 41, 42 sind in einem gemeinsamen Anschlussstecker 44 des elektronischen Steuergeräts 6 zusammengeführt.

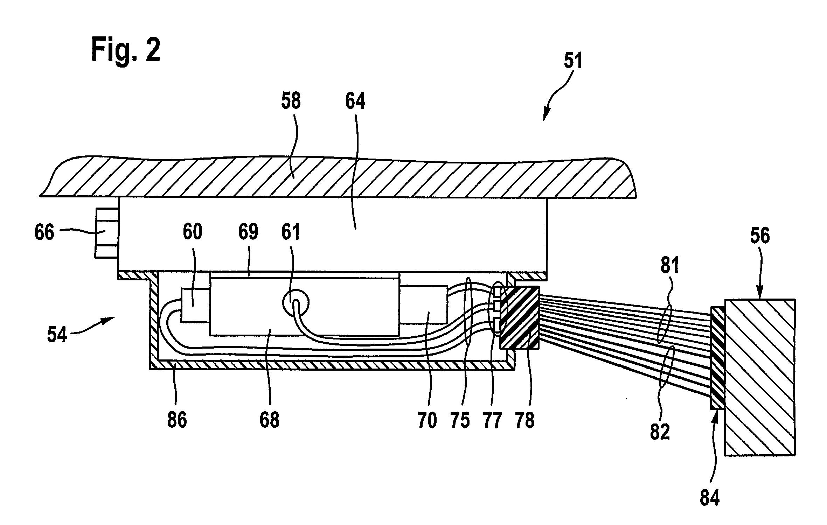

In Figur 2 ist eine von den Patentansprüchen nicht umfasste elektrohydraulische Steuereinrichtung 51 schematisch dargestellt. Die elektrohydraulische Steuereinrichtung 51 umfasst eine hydraulische Steuereinrichtung 54, die separat zu einem elektronischen Steuergerät 56 ausgeführt und angeordnet ist. Die hydraulische Steuereinrichtung 54 ist an einer Grenzfläche 58 eines Kraftfahrzeugs befestigt. Das elektronische Steuergerät 56 ist an einer anderen Stelle des Kraftfahrzeugs untergebracht, wo es nicht oder nicht so starken Umgebungseinflüssen ausgesetzt ist.

Die hydraulische Steuereinrichtung 54 umfasst zwei Sensoren 60 und 61. Unmittelbar an der Grenzfläche 58 des Kraftfahrzeugs ist eine erste Steuerplatte 64 befestigt, die nach außen hin druckdicht ausgeführt ist und einen gemeinsamen Hydraulikanschluss 66 aufweist. Die zweite Steuerplatte 68 ist unter Zwischenschaltung eines Zwischenblechs 69 an die erste Steuerplatte 64 angebaut.

In der zweiten Steuerplatte 68 ist ein (nicht näher bezeichneter) Ventilschieber eines hydraulischen Ventils geführt, der durch einen Elektromagneten 70 betätigbar ist. Die Sensoren 60 und 61 sind an die zweite Steuerplatte 68 angebaut beziehungsweise in diese integriert. Leistungs- und Signalübertragungsleitungen 75, die von dem Elektromagneten 70 und den Sensoren 60 und 61 ausgehen, sind an der zweiten Steuerplatte 68 vorbei geführt und über eine interne Kontaktierung 77 an einen zentralen Anschlussstecker 78 angeschlossen. Durch 81 sind Kabelleitungen für Sensoren angedeutet, die von dem zentralen Anschlussstecker 78 ausgehen. Mit 82 sind Kabelleitungen für Elektromagneten bezeichnet, die ebenfalls von dem zentralen Anschlussstecker 78 ausgehen. Die Kabelleitungen 81 und 82 sind mit Hilfe eines gemeinsamen Anschlusssteckers 84 an das elektronische Steuergerät 56 angeschlossen.

Die zweite Steuerplatte 68 mit den außerhalb der zweiten Steuerplatte 68 verlaufenden Leistungs- und Signalübertragungsleitungen 75 ist zur Umgebung durch eine Schutzhaube 86 aus Kunststoff abgedichtet. Dadurch wird sichergestellt, dass auch im Leckagefall kein Hydraulikmedium in die Umgebung gelangt.

### Bezugszeichenliste

- 1.: elektrohydraulische Steuereinrichtung
- 4.: hydraulische Steuereinrichtung
- 6.: elektronisches Steuergerät
- 8.: Grenzfläche
- 10.: Hallsensor
- 11.: Drucksensor
- 12.: Drucksensor
- 14.: erste Steuerplatte
- 16.: Hydraulikanschluss
- 18.: zweite Steuerplatte
- 19.: Zwischenblech
- 20.: Elektromagnet
- 22.: Leiteinrichtung
- 24.: Kunststoff
- 25.: Leistungsübertragungs- und Signalübertragungsleitungen
- 28.: erster Leiterarm
- 30.: Signalleitung
- 32.: zweiter Leiterarm
- 33.: Steckkontakt
- 34.: Leistungsleitung
- 36.: Schutzhaube
- 38.: zentraler Anschlussstecker
- 41.: Kabelleitung
- 42.: Kabelleitung
- 44.: Anschlussstecker
- 51.: elektrohydraulische Steuereinrichtung
- 54.: hydraulische Steuereinrichtung
- 56.: elektronisches Steuergerät
- 58.: Grenzfläche
- 60.: Sensor
- 61.: Sensor
- 64.: erste Steuerplatte
- 66.: Hydraulikanschluss
- 68.: zweite Steuerplatte
- 69.: Zwischenblech
- 70.: Elektromagnet
- 75.: Leistungs- und Signalübertragungsleitung
- 77.: interne Kontaktierung
- 78.: zentraler Anschlussstecker
- 81.: Kabelleitung
- 82.: Kabelleitung
- 84.: Anschlussstecker
- 86.: Schutzhaube

## Patentansprüche

1. Elektrohydraulische Steuereinrichtung umfassend:
a) mindestens ein elektrisches Aktorelement (20),
b) mindestens ein Sensorelement (10-12),
c) mindestens ein elektronisches Steuergerät (6),
wobei das Aktorelement (20) und das Sensorelement (10-12) in einer von dem elektronischen Steuergerät (6) getrennten und hydraulisch dichten hydraulischen Steuereinrichtung (4) zusammengefasst sind, die einen gemeinsamen Leistungs- und Signalanschluss (38) für Verbindungsleitungen (41,42) aufweist, die die hydraulisch Steuereinrichtung (4) mit dem elektronischen Steuergerät (6) verbinden **dadurch gekennzeichnet, dass** die hydraulische Steuereinrichtung (4) mindestens eine Leiteinrichtung (22) aus Kunststoff (24) umfasst, in welche Leistungs- und Signalübertragungsleitungen (25) eingebettet sind, die das Aktorelement (20) und das Sensorelement (10-12) mit dem Leistungs- und Signalanschluss (38) verbinden.

2. Steuereinrichtung nach Anspruch 1, **dadurch gekennzeichnet, dass** der gemeinsame Leistungs- und Signalanschluss (38) einstückig mit der Leiteinrichtung (22) ausgebildet ist.

3. Steuereinrichtung nach Anspruch 1 oder 2, **dadurch gekennzeichnet, dass** mindestens ein Sensorelement (10) in die Leiteinrichtung (22) integriert ist.

4. Steuereinrichtung nach einem der Ansprüche 1 bis 3, **dadurch gekennzeichnet, dass** mindestens ein Hall- und/oder mindestens ein Drucksensor (10-12) in die Leiteinrichtung (22) integriert sind.

5. Steuereinrichtung nach einem der Ansprüche 1 bis 4, **dadurch gekennzeichnet, dass** mindestens ein Steckverbindungselement (33) in die Leiteinrichtung (22) integriert ist.

6. Steuereinrichtung nach einem der vorhergehenden Ansprüche, **dadurch gekennzeichnet, dass** die hydraulische Steuereinrichtung (4) eine Schutzhaube (36) aus Kunststoff aufweist.

7. Steuereinrichtung nach Anspruch 6, **dadurch gekennzeichnet, dass** der gemeinsame Leistungs- und Signalanschluss einstückig mit der Schutzhaube ausgebildet ist.

8. Steuereinrichtung nach einem der vorhergehenden Ansprüche, **dadurch gekennzeichnet, dass** die hydraulische Steuereinrichtung (4) mindestens eine Ventileinrichtung umfasst.

9. Steuereinrichtung nach einem der vorhergehenden Ansprüche, **dadurch gekennzeichnet, dass** die hydraulische Steuereinrichtung (4) mindestens eine Steuerplatte (14,18) umfasst.

## Claims

1. Electrohydraulic control device, comprising:
a) at least one electrical actuator element (20),
b) at least one sensor element (10-12),
c) at least one electronic control unit (6),
the actuator element (20) and the sensor element (10-12) being combined in a hydraulically leaktight hydraulic control device (4) which is separate from the electronic control unit (6) and which has a common power and signal terminal (38) for connecting lines (41, 42) which connect the hydraulic control device (4) to the electronic control unit (6), **characterized in that** the hydraulic control device (4) comprises at least one guide device (22) made from plastic (24), into which are embedded power and signal transmission lines (25) which connect the actuator element (20) and the sensor elements (10-12) to the power and signal terminal (38).

2. Control device according to Claim 1, **characterized in that** the common power and signal terminal (38) is formed in one piece with the guide device (22).

3. Control device according to Claim 1 or 2, **characterized in that** at least one sensor element (10) is integrated into the guide device (22).

4. Control device according to one of Claims 1 to 3, **characterized in that** at least one Hall and/or at least one pressure sensor (10-12) are/is integrated into the guide device (22).

5. Control device according to one of Claims 1 to 4, **characterized in that** at least one plug-connection element (33) is integrated into the guide device (22).

6. Control device according to one of the preceding claims, **characterized in that** the hydraulic control device (4) has a protective hood (36) made from plastic.

7. Control device according to Claim 6, **characterized in that** the common power and signal terminal is formed in one piece with the protective hood.

8. Control device according to one of the preceding claims, **characterized in that** the hydraulic control device (4) comprises at least one valve device.

9. Control device according to one of the preceding claims, **characterized in that** the hydraulic control device (4) comprises at least one control board (14, 18).

## Revendications

1. Dispositif de commande électrohydraulique comprenant :
a) au moins un élément actionneur électrique (20),
b) au moins un élément détecteur (10-12),
c) au moins un module de commande électronique (6),
l'élément actionneur (20) et l'élément détecteur (10-12) étant assemblés en un dispositif de commande hydraulique (4) séparé du module de commande électronique (6) et hydrauliquement étanche, lequel présente une borne de puissance et de signal (38) commune pour des lignes de liaison (41, 42) qui relient le dispositif de commande hydraulique (4) avec le module de commande électronique (6), **caractérisé en ce que** le dispositif de commande hydraulique (4) comprend au moins un dispositif de guidage (22) en matière plastique (24) dans lequel sont enrobées des lignes de transmission de puissance et de signaux (25) qui relient l'élément actionneur (20) et l'élément détecteur (10-12) avec la borne de puissance et de signal (38).

2. Dispositif de commande selon la revendication 1, **caractérisé en ce que** la borne de puissance et de signal (38) est réalisée d'une seule pièce avec le dispositif de guidage (22).

3. Dispositif de commande selon la revendication 1 ou 2, **caractérisé en ce qu'**au moins un élément de détection (10) est intégré dans le dispositif de guidage (22).

4. Dispositif de commande selon l'une des revendications 1 à 3, **caractérisé en ce qu'**au moins un capteur à effet Hall et/ou au moins un capteur de pression (10-12) est intégré dans le dispositif de guidage (22).

5. Dispositif de commande selon l'une des revendications 1 à 4, **caractérisé en ce qu'**au moins un élément de connexion (33) est intégré dans le dispositif de guidage (22).

6. Dispositif de commande selon l'une des revendications précédentes, **caractérisé en ce que** le dispositif de commande hydraulique (4) présente un capot de protection (36) en matière plastique.

7. Dispositif de commande selon la revendication 6, **caractérisé en ce que** la borne de puissance et de signal commune est réalisée d'une seule pièce avec le capot de protection.

8. Dispositif de commande selon l'une des revendications précédentes, **caractérisé en ce que** le dispositif de commande hydraulique (4) comprend au moins un dispositif à vanne.

9. Dispositif de commande selon l'une des revendications précédentes, **caractérisé en ce que** le dispositif de commande hydraulique (4) comprend au moins une plaque de commande (14, 18).
